# DEMANDE DE BREVET EUROPEEN

(11) **EP 0 639 761 A1**
(43) Date de publication de la demande: **22.02.1995**
(21) Numéro de dépôt: 94109142.3
(22) Date de dépôt: 15.06.1994
(51) Int. Cl.: G01L 9/12, G01L 13/06

(54) **Capteur de pression différentielle de type capacitif**

(30) Priorité: 25.06.1993 CH 1911/93
(71) Demandeur: CSEM, Centre Suisse d'Electronique et de Microtechnique S.A., CH-2007 Neuchâtel (CH)
(72) Inventeur: Felix, Rudolf, CH-2072 Saint-Blaise (CH); Philippe, Renaud, CH-1025 Saint-Sulpice (CH)
(74) Mandataire: Caron, Gérard

(57) **Abrégé**

L'invention concerne un capteur de pression différentielle de type capacitif comportant des moyens définissant une première chambre soumise à une première pression, des moyens définissant une deuxième chambre soumise à une deuxième pression, des moyens définissant une troisième chambre dite de référence, isolée desdites première et deuxième chambres par des membranes respectives et dans laquelle règne une pression dite pression de référence, le capteur comportant en outre deux condensateurs ayant chacun une paire d'électrodes, l'une des électrodes de chaque paire étant associée à l'une desdites membranes pour faire varier la capacité du condensateur sous l'action de la pression à laquelle sa membrane est soumise, caractérisé en ce que lesdites électrodes garnissent des portions de paroi de ladite troisième chambre et en ce que les autres électrodes de chacune desdites paires d'électrodes sont prévues sur la même face d'un substrat commun formant la base de la structure dudit capteur.

## Description

L'invention concerne les capteurs de pression de type capacitif et plus particulièrement les capteurs de pression différentielle de type capacitif comprenant deux membranes déformables qui constituent chacune l'armature mobile d'un condensateur.

On connaît déjà du document US 4'879'627 un capteur de pression différentielle de type capacitif réalisé selon les techniques de micro-usinage de matériaux tels les matériaux semi-conducteurs. Ce capteur, de forme générale cylindrique, comprend deux membranes opposées en silicium, conductrices, déformables et reliées ensemble au niveau de leur bord périphérique par un anneau espaceur. Les membranes sont donc espacées l'une de l'autre et délimitent un volume de référence fermé et dans lequel règne une pression nulle. Les deux membranes sont respectivement associées à deux flasques par l'intermédiaire de deux autres anneaux espaceurs. Chaque flasque comporte une base conductrice munie en son centre d'une conduite comportant une première extrémité qui débouche en regard de la membrane à laquelle elle est associée et une deuxième extrémité sur laquelle peut être branché un tuyau, si bien que les bases des flasques avec les membranes forment respectivement les armatures de deux condensateurs sensibles à la pression.

Un inconvénient de ce type de capteur réside dans le fait que le milieu pénètre dans l'entrefer des condensateurs. La constante diélectrique du milieu influence donc les capacités des condensateurs de mesure d'une manière difficile à contrôler.

Un autre inconvénient réside dans la réalisation de ces capteurs qui est complexe et coûteuse en raison des paramètres géométriques à respecter en vue de l'ajustement et de l'assemblage des différents éléments entre eux et notamment des anneaux espaceurs qui déterminent l'épaisseur de l'entrefer des condensateurs de mesure.

Par ailleurs avec un tel capteur, plus la pression extérieure est grande plus les armatures des condensateurs s'éloignent l'une de l'autre ce qui conduit à une diminution de la sensibilité du capteur, la capacité étant inversement proportionnelle à l'épaisseur de son entrefer.

L'invention a donc pour but principal de remédier aux inconvénients de l'art antérieur susmentionné en fournissant un capteur de pression différentielle de type capacitif qui soit facile et économique à fabriquer et qui soit insensible au milieu dont on mesure la pression tout en présentant à la fois une grande résolution et une bonne sensibilité.

A cet effet l'invention a pour objet un capteur de pression différentielle de type capacitif comportant des moyens définissant une première chambre soumise à une première pression, des moyens définissant une deuxième chambre soumise à une deuxième pression, des moyens définissant une troisième chambre, qui constitue un volume de référence et est isolée desdites première et deuxième chambre par des membranes respectives, le capteur comportant en outre deux condensateurs ayant chacun une paire d'électrodes, l'une des électrodes de chaque paire étant associée à l'une desdites membranes pour faire varier la capacité du condensateur sous l'action de la pression à laquelle sa membrane est soumise, caractérisé en ce que lesdites électrodes garnissent des portions de paroi de ladite troisième chambre et en ce que les autres électrodes de chacune desdites paires d'électrodes sont prévues sur la même face d'un substrat commun formant la base de la structure dudit capteur.

Grâce à ces caractéristiques, les dimensions de l'entrefer des condensateurs peuvent être déterminées par un seul espaceur dont l'épaisseur peut être facilement contrôlée notamment dans le cas où ce dernier est réalisé à l'aide des technologies de micro-usinage des matériaux semi-conducteurs.

On notera de plus que de façon avantageuse la structure du capteur selon l'invention permet à l'entrefer des condensateurs de mesure d'être isolé du milieu dont on mesure la pression si bien que la nature de ce dernier n'influence aucunement les mesures.

En outre, ces caractéristiques permettent de réaliser un capteur de type planaire, c'est à dire un capteur dans lequel la mesure des pressions est réalisée du même côté d'un plan d'un substrat et sur lequel les connexions des condensateurs peuvent être établies avantageusement d'un même côté du capteur.

D'autres caractéristiques et avantages de l'invention apparaîtront plus clairement à la lecture de la description qui suit de modes de réalisation de l'invention donnés à titre purement illustratif et non limitatif, cette description étant faite en liaison avec le dessin dans lequel:
- la figure 1 est une vue éclatée en perspective d'un premier mode de réalisation d'un capteur de pression différentielle de type capacitif selon l'invention;
- la figure 2 est une coupe schématique selon la ligne II-II de la figure 1 ;
- les figures 3 à 5 sont des coupes selon la ligne II-II du capteur de pression représenté à différentes étapes de son procédé de fabrication;
- la figure 6a est une vue éclatée en perspective d'un deuxième mode de réalisation d'un capteur de pression différentielle de type capacitif selon l'invention;
- la figure 6b est une vue en plan de dessous du module espaceur du capteur de la figure 6a; et
- la figure 7 est une coupe schématique selon la ligne VII-VII de la figure 6a.

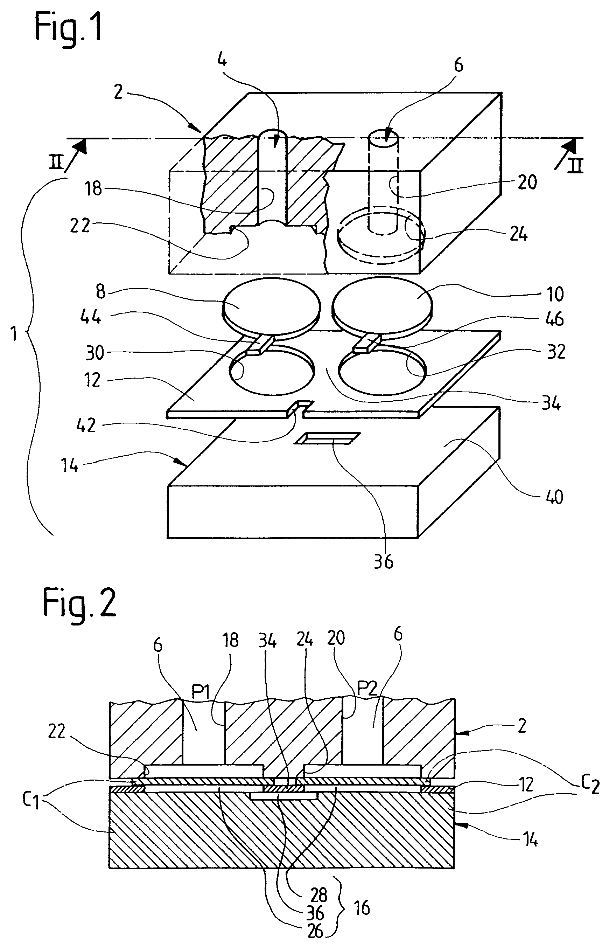

En se référant à la figure 1, on voit une vue éclatée d'un premier mode de réalisation d'un capteur de pression différentielle de type capacitif selon l'invention, que l'on désignera ci-après par capteur, qui est désigné par la référence générale 1. La figure 1 sera mieux comprise en se référant simultanément à la figure 2.

Il est important de noter que le dessin ne représente pas les dimensions relatives exactes des éléments les uns par rapport aux autres et que les dimensions ont été fortement exagérées pour plus de clarté. A titre indicatif, les dimensions générales d'un tel capteur sont 6 x 3 x 1 mm³.

Le capteur 1 comprend généralement une plaque supérieure 2 dans laquelle sont ménagées une première et une deuxième chambres respectivement 4 et 6, deux membranes mobiles 8 et 10 associées respectivement aux chambres 4 et 6, des moyens d'entretoise 12 délimitant avec les membranes et une plaque inférieure 14 une troisième chambre 16.

Les première et deuxième chambres 4 et 6 sont formées par des conduits d'entrée de pression qui sont destinés à être soumis à des première et deuxième pressions respectivement P1 et P2.

Comme cela est visible à la figure 2, les conduits d'entrée de pression 4, 6 comprennent chacun une première partie 18, 20 et une deuxième partie, 22, 24 de sections différentes. Les premières parties 18, 20, qui sont associées respectivement à des prises de pression extérieure (non représentées), présentent chacune une section inférieure à celle des deuxièmes parties 22, 24 qui sont, quant à elles, respectivement associées aux membranes 8, 10 et qui présentent chacune une section légèrement inférieure à celle de ces membranes. La plaque supérieure 2 repose ainsi sur la périphérie des membranes.

Dans l'exemple représenté, la plaque supérieure 2 est réalisée en verre. Il va de soi que l'homme du métier pourra choisir tout autre matériau approprié, on pourra par exemple réaliser la plaque supérieure en métal.

Les membranes 8 et 10 ont la configuration de pastilles de faible épaisseur et sont, dans ce mode de réalisation, réalisées à partir d'un matériau semi-conducteur tel que le silicium selon un procédé qui sera décrit en détail ci-après.

La troisième chambre 16 comprend deux cavités 26, 28 délimitées par des ouvertures 30, 32 ménagées dans les moyens d'entretoise 12. Les ouvertures 30, 32 sont voisines l'une de l'autre et séparées par une portion 34 des moyens d'entretoise 12. Les cavités 26, 28 sont reliées entre elles par un canal 36 qui, formé par un évidement ménagé dans une face 40 de la plaque inférieure 14, s'étend de part et d'autre de la portion 34 pour déboucher dans les cavités 26, 28. Le canal 36 est réalisé sous la forme d'un capillaire pour des raisons qui seront indiquées au cours de la description.

Dans ce mode de réalisation, les membranes 8 et 10 sont électriquement isolées l'une de l'autre, les moyens d'entretoise 12 sont en un matériau isolant tel que l'oxyde de silicium et le substrat 14 est réalisé en un matériau conducteur tel que le silicium dopé.

Les membranes 8, 10, les moyens d'entretoise 12 et la face 40 forment ainsi respectivement des premières électrodes, un espaceur définissant l'épaisseur de l'entrefer et des deuxièmes électrodes de deux condensateurs C1, C2 dont les capacités peuvent varier sous l'action de la pression à laquelle les membranes sont soumises. On remarquera en outre que la face 40 fait office dans ce mode de réalisation d'électrode commune aux condensateurs C1 et C2.

L'épaisseur de l'entrefer des condensateurs C1, C2 est donc déterminée par l'épaisseur des moyens d'entretoise 12.

on notera à ce propos que la sensibilité du capteur dépend simultanément de l'épaisseur de l'entrefer et de l'épaisseur des membranes.

A titre indicatif la surface d'une membrane est d'environ 4 mm², son épaisseur peut varier entre 5 et 100 µm et l'épaisseur des moyens d'entretoise est d'environ 2 µm.

Comme cela est visible de la figure 1, une encoche 42 est prévue dans les moyens d'entretoise 12. Cette encoche 42 permet d'établir un contact entre l'électrode commune 40 et une entrée d'un circuit de traitement extérieur (non représenté).

De façon similaire, chaque membrane comprend une languette 44, 46 qui s'étend à partir de sa périphérie, et qui est destinée à établir un contact électrique entre la membrane 8, 10 et une autre entrée du circuit de traitement extérieur.

La troisième chambre 16 (c'est-à-dire, les cavités 26, 28 et le canal 36) est remplie par un gaz à une pression dite pression de référence et qui est déterminée au moment de la fabrication.

A ce propos, et afin d'assurer une gamme de fonctionnement étendue, la troisième chambre 16 est fermée à une pression supérieure à la pression de travail, c'est-à-dire aux pressions P1 et P2 dont on désire mesurer les variations, de sorte que les membranes 8, 10 sont sensiblement maintenues déformées vers l'extérieur de la troisième chambre 16.

Il est particulièrement important de limiter l'amplitude des déplacements des membranes 8 et 10. Pour cette raison, le volume de la chambre 16 doit être faible. Le milieu qui remplit cette chambre 16 peut être soit un gaz, comme mentionné ci-dessus, ou un liquide.

Le capteur fonctionne selon le principe d'une balance. Lorsque les pressions externes P1 et P2 auxquelles sont soumises les membranes 8, 10 sont égales, le déplacement des membranes est identique si bien que la différence de capacité entre les condensateurs C1 et C2 est nulle puisque leurs dimensions sont identiques.

En revanche, en présence de pressions externes P1 et P2 différentes, une des membranes 8, 10 se rapproche du substrat tandis que l'autre s'en éloigne ce qui conduit à une différence de capacité entre les condensateurs C1 et C2. Cette différence de capacité peut être alors mesurée et interprétée par le circuit de traitement pour indiquer la différence de pression entre P1 et P2.

Dans ce dernier cas, les deux cavités ont alors des volumes différents et le gaz ou le liquide contenu dans le volume 16 s'écoule à travers le canal capillaire 36 pour égaliser la pression de référence s'exerçant sur les membranes 8, 10, la vitesse d'écoulement du gaz ou du liquide étant fonction des dimensions du canal capillaire 36, celles-ci influençant en conséquence la constante de temps du capteur.

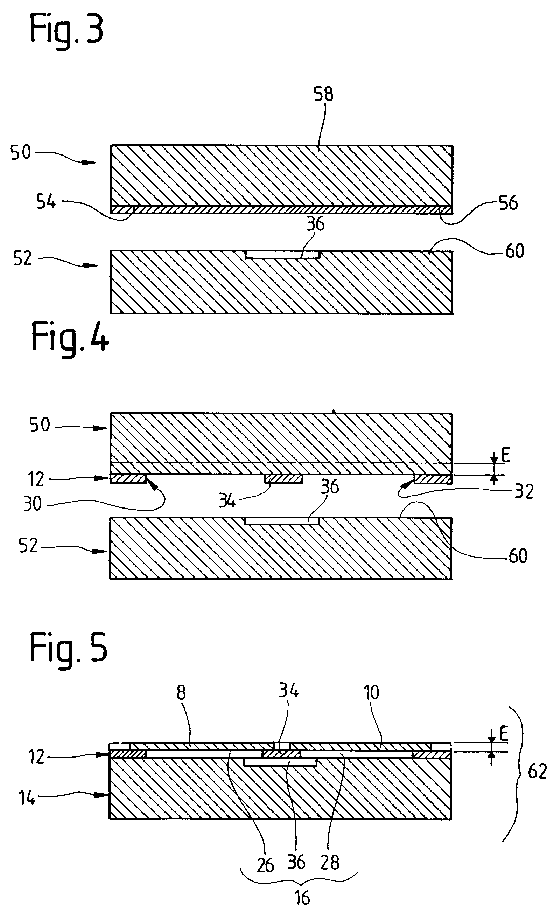

En se référant aux figures 3 à 5 on va maintenant décrire un procédé de réalisation du premier mode de réalisation du capteur de l'invention qui vient d'être décrit. Bien que ce procédé permette la réalisation simultanée d'un pluralité de capteurs à partir d'une paire de plaquettes semi-conductrices, la description et le dessin ne porteront, par simplification, que sur un seul capteur.

A titre d'exemple les plaquettes (non représentées) à partir desquelles est réalisé le capteur sont en silicium légèrement dopé et présentant une orientation cristallographique 〈100〉.

A la figure 3, on a représenté un premier élément 50 à partir duquel seront formés les membranes 8, 10 et les moyens d'entretoise 12 et un deuxième élément 52, à partir duquel sera formé le substrat.

L'élément 50 comprend sur une première 54 de ses faces une couche d'oxyde de silicium 56 (SiO₂) formée, par exemple, par oxydation thermique de l'élément 50 dans un four sous une atmosphère oxydante, la deuxième face 58 de l'élément 50 ayant été préalablement protégée.

Il est bien entendu que selon une variante la formation de la couche 56 peur être réalisée par dépôt chimique ou physique en phase vapeur (CVD ou PVD).

L'élément 52 est quant à lui structuré pour définir le canal 36. Pour ce faire, on dépose un couche de résine photosensible (non représentée) sur une première face 60 de l'élément 52, on insole cette couche de résine à travers un masque (également non représenté) pour n'exposer qu'une partie de la couche de résine délimitant le canal 36, on élimine la partie insolée, on grave la partie découverte de l'élément 52 pour former le canal 36 puis on élimine les parties restantes de la couche de résine.

L'opération d'élimination de la résine est réalisée de façon classique, par exemple, par voie humide à l'aide de solvant approprié. L'opération de gravure de l'élément est réalisée par plasma. L'opération de gravure peut, selon une variante, se faire par voie humide.

A la figure 4 on a illustré l'étape de structuration de la couche 56 en vue de former et configurer les moyens d'entretoise 12 qui, comme cela est visible à la figure 1, ont la forme d'une plaque comportant les ouvertures 30, 32 et l'encoche 42.

Pour cette structuration, le processus est identique à celui décrit en liaison avec la structuration de l'élément 52 à la figure 3 à la différence du masque utilisé et de l'agent de gravure qui doit graver le SiO₂ mais qui ne doit pas réagir avec le silicium.

L'opération de gravure de la couche 56 à travers le masque est par exemple réalisée par attaque chimique à l'aide d'une solution d'acide fluorhydrique (HF).

La couche 56 étant structurée, on procède, après une préparation appropriée des faces à assembler, à la mise en place des deux éléments 50 et 52 de manière que la face 60 soit située en regard de la couche 56 structurée.

La préparation des deux faces à assembler consiste par exemple en un nettoyage tel que décrit dans la publication intitulée "RCA" No 31 page 187, 1970.

Les deux éléments 50, 52 étant préparés, on procède à l'assemblage (non représenté) de ces derniers par une soudure autogène sous une pression déterminée qui définit la pression de référence. Pour ce faire, on introduit les deux élément 50 ,52 dans un four préchauffé à une température d'environ 1000°C dans une atmosphère pressurisée à la pression requise.

L'assemblage réalisé, on procède à l'amincissement de l'élément 50. Pour ce faire, la deuxième face 58 de cet élément est attaquée jusqu'à une épaisseur déterminée E, en l'occurrence l'épaisseur des membranes 8, 10 que l'on désire obtenir.

A la figure 5, on a illustré l'étape de structuration de l'élément 50 aminci pour former les membranes 8, 10.

Le processus de structuration de l'élément 50 aminci est identique à celui décrit en liaison avec la structuration de l'élément 52 de la figure 3 à la seule différence du masque utilisé qui doit permettre de définir le contour de chaque membrane 8, 10 avec sa languette de contact 44, 46.

La partie 62 du capteur 1 qui vient d'être réalisée et comprenant le substrat 14, les moyens d'entretoise 12 et les membranes 8, 10, est alors assemblée à un troisième élément (non représenté) destiné à former la plaque supérieure 2 et dans lequel ont préalablement été réalisées les premier et deuxième conduits d'entrée de pression 4, 6 associés respectivement aux membranes 8, 10. L'assemblage de la partie 62 avec le troisième élément est réalisé par exemple par soudage ou collage selon la nature de ce troisième élément.

Les capteurs peuvent alors être séparés les uns des autres au cours d'une dernière opération de découpage des plaquettes assemblées.

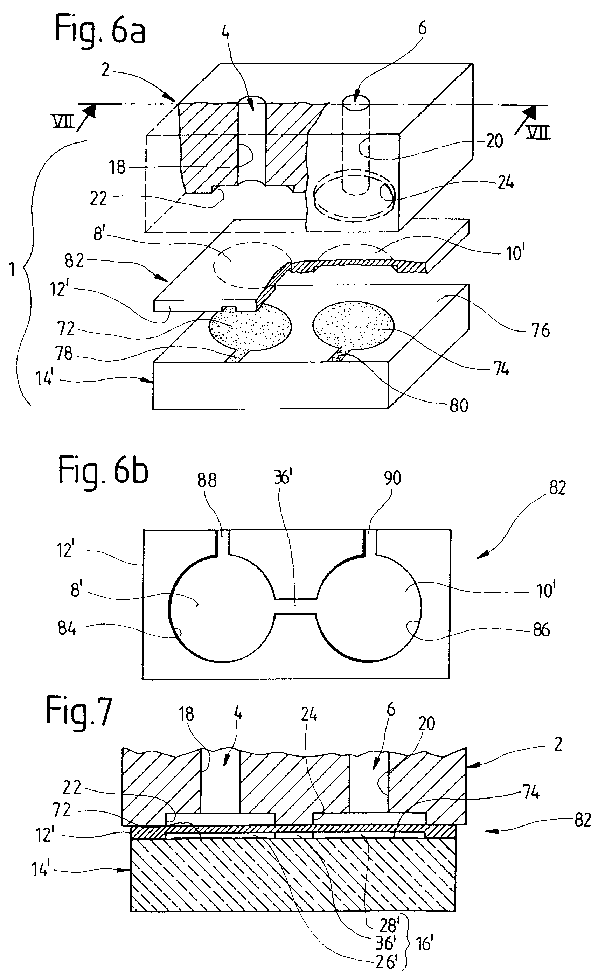

En se référant aux figures 6 et 7, on voit un deuxième mode de réalisation d'un capteur selon l'invention, désigné généralement par 70, dans lequel les mêmes éléments que ceux représentés aux figures 1 à 5 sont désignés par les mêmes références numériques.

A la différence du premier mode de réalisation, le substrat 14' est réalisé en un un matériau isolant, en l'occurrence en verre, si bien que des électrodes 72 ,74 associées au substrat doivent être rapportées sur une face 76 ce dernier

Ces électrodes 72, 74 sont réalisées par exemple par évaporation sous vide d'un métal tel que l'aluminium à travers un masque (non représenté) afin de définir deux pastilles isolées l'une de l'autre et comprenant chacune une languette 78 ,80 destinée à établir un contact avec un circuit de traitement (également non représenté).

De plus, alors que dans le premier mode de réalisation les membranes 8, 10 d'une part, et les moyens d'entretoise 12 d'autre part, sont respectivement réalisés en un matériau conducteur et isolant, et que le canal 36 reliant les deux cavités 26, 28 formant le troisième volume 16 est réalisé dans la face 40 du substrat 14', les deux membranes 8',10', les moyens d'entretoise 12' et le volume de la troisième chambre 16' sont tous définis à partir d'une seule plaque intermédiaire structurée conductrice 82 intercalée entre la plaque supérieure 2 et le substrat 14.

La plaque intermédiaire 82 comprend, comme cela ressort particulièrement de la figure 6b deux évidements ronds 84 ,86 dont le fond forme les membranes 8' 10'. Les évidements 84, 86 sont reliés entre eux par un canal 36' qui délimite avec ceux-ci et la face supérieure 76 du substrat 14', la troisième chambre 16'. Les membranes 8', 10' sont donc électriquement connectées par la plaque intermédiaire 82 et forment ainsi l'électrode commune de la paire de condensateurs C'1, C'2 du capteur et dont les deux autres électrodes sont formées par les métallisations 72, 74.

Pour éviter tout court-circuit entre l'électrode commune formée par la plaque intermédiaire 82 et les électrodes 72, 74, la surface de chaque membrane 8', 10' est sensiblement supérieure à la surface de l'électrode opposée 72, 74 et une rainure de passage 88, 90, débouchant dans les évidements 84, 86 et ayant une largeur sensiblement plus grande que celle des languettes 78, 80, est prévue en regard de chacune de ces dernières. Ces rainures 88, 90 serviront de canaux de remplissage lors de la fermeture des capteurs en fin de procédé.

La réalisation de la plaque intermédiaire 82 peut se faire de la façon suivante. On structure une face de la plaque intermédiaire 82 par gravure à travers un masque réalisé classiquement et délimitant le contour des évidements 84, 86, du canal 36' et des passages 88, 90.

Une fois la plaque intermédiaire 82 réalisée, celle-ci est assemblée par sa face structurée au substrat 14'.

L'assemblage avec le substrat est réalisé par exemple par soudure anodique, puis on procède à un amincissement de la plaque par une gravure de la surface non structurée de celle-ci jusqu'à atteindre l'épaisseur désirée.

Dans une dernière étape, le capteur est fermé à la pression désirée par obturation des rainures de passage 88 et 90 à l'aide de verre fondu ou d'une colle appropriée.

Il est bien entendu que l'invention n'est pas limitée aux modes de réalisation décrits et que des variantes de réalisation pourront apparaître à l'homme du métier. On pourra notamment prévoir de remplacer dans le premier mode de réalisation, le substrat conducteur 14 par le substrat 14' du deuxième mode de réalisation.

## Revendications

1. Capteur de pression différentielle de type capacitif comportant des moyens définissant une première chambre soumise à une première pression, des moyens définissant une deuxième chambre soumise à une deuxième pression, des moyens définissant une troisième chambre, qui constitue un volume de référence et est isolée desdites première et deuxième chambres par des membranes respectives, le capteur comportant en outre deux condensateurs ayant chacun une paire d'électrodes, l'une des électrodes de chaque paire étant associée à l'une desdites membranes pour faire varier la capacité du condensateur sous l'action de la pression à laquelle sa membrane est soumise, caractérisé en ce que lesdites électrodes garnissent des portions de paroi de ladite troisième chambre et en ce que les autres électrodes de chacune desdites paires d'électrodes sont prévues sur la même face d'un substrat commun formant la base de la structure dudit capteur.

2. Capteur de pression différentielle selon la revendication 1, caractérisé en ce que ledit volume de référence est rempli par un gaz.

3. Capteur de pression différentielle selon la revendication 1, caractérisé en ce que ledit volume de référence est rempli par un liquide.

4. Capteur de pression différentielle selon l'une des revendications 1 à 3, caractérisé en ce que des moyens d'entretoise s'étendent entre le substrat et les membranes.

5. Capteur de pression différentielle selon l'une des revendications 1 à 4, caractérisé en ce que ledit volume de référence comprend deux cavités associées respectivement aux condensateurs et en ce que lesdites cavités sont reliées entre elles par un canal.

6. Capteur de pression différentielle selon l'une des revendications 4 et 5, caractérisé en ce que les cavités sont ménagées dans les moyens d'entretoise.

7. Capteur de pression différentielle selon la revendication 5 ou 6, caractérisé en ce que ledit canal est un canal capillaire.

8. Capteur de pression différentielle selon l'une des revendications 5 à 7, caractérisé en ce que ledit canal est réalisé dans ledit substrat.

9. Capteur de pression différentielle selon l'une des revendications 5 à 7, caractérisé en ce que ledit canal est réalisé dans les moyens d'entretoise.

10. Capteur de pression différentielle selon la revendication 9, caractérisé en ce que les moyens d'entretoise et les membranes présentent une structure monolithique.

11. Capteur de pression différentielle selon l'une quelconque des revendications 1 à 9, caractérisé en ce que le substrat, et les membranes sont réalisés en un matériau semi-conducteur.

12. Capteur de pression différentielle selon l'une des revendications 1 à 10 caractérisé en ce que le substrat est réalisé en un matériau isolant, en ce que lesdites électrodes sont réalisées par des métallisation et en ce que les membranes sont réalisées en matériau semi-conducteur.
